# EUROPÄISCHE PATENTANMELDUNG

(11) **EP 0 576 716 A1**
(43) Veröffentlichungstag der Anmeldung: **05.01.1994**
(21) Anmeldenummer: 92111345.2
(22) Anmeldetag: 03.07.1992
(51) Int. Cl.: F04F 11/02, F02C 3/02, B01J 3/08

(54) **Druckwellenmaschine**

(71) Anmelder: ABB RESEARCH LTD., CH-8050 Zürich 11 (CH)
(72) Erfinder: Keller, Jakob, Prof. Dr., CH-5605 Dottikon (CH)

(57) **Zusammenfassung**

Druckwellenmaschine (1), die zur Ausführung chemischer Reaktionen geeignet ist. Dies wird dadurch erreicht, dass Mittel (3) vorgesehen sind, welche die Einleitung von mindestens einem Edukt zusätzlich zu dem Brennstoff-Gas-Gemisch ermöglichen, dass die nach der Zündung des Brennstoff-Gas-Gemisches in den jeweiligen Zellen (31) auftretenden Temperaturen und Drücke auf das jeweilige mindestens eine Edukt abgestimmt sind, sodass dieses solange chemisch umgesetzt wird, bis eine Expansionswelle diese Umsetzung zum Erliegen bringt, und dass der Druckwellenmaschine (1) Mittel (8,12) nachgeschaltet sind für eine Austragung des mindestens einen Produktes dieser Umsetzung.

Diese Druckwellenmaschine (1) weist einen mindestens eine Lage Zellen (31) aufweisenden Zellenrotor (30) auf, mit einem den Zellenrotor (30) am Umfang und stirnseitig einschliessenden Gehäuse (33), mit Mitteln, welche ein Gas vor dem Eintritt in die Druckwellenmaschine (1) mit einem Brennstoff vermischen zu einem brennbaren Brennstoff-Gas-Gemisch, welches in die Zellen (31) eingeleitet und dort gezündet wird.

## Beschreibung

### Technisches Gebiet

Die Erfindung geht aus von einer Druckwellenmaschine gemäss dem Oberbegriff des Anspruchs 1.

### Stand der Technik

In der Schrift EP-B1-0 212 181 ist als Hochdruckverdichterteil einer Gasturbinenanlage eine Druckwellenmaschine vorgeschlagen worden, bei welcher das Hochdruckgas durch Selbstzündung eines Brennstoffes erzeugt wird, welcher seinerseits aus Brennstoffdüsen in einem Gehäuse der Druckwellenmaschine im Bereich der Niederdruckkanäle in den Zellenrotor eingespritzt bzw. eingeblasen wird. Die Selbstzündung erfolgt dabei detonationsartig beim Zusammentreffen des Brennstoff-Luft-Gemisches mit einer im Bereich der Brennstoffeinbringung auftretenden Kompressionswelle. Die dabei auftretenden Druckwellen erzeugen einerseits in den entsprechenden Bereichen des Rotorraumes Hochdruckluft, die durch einen Hochdruckluftkanal einer Brennkammer zur Erzeugung von Treibgas für die Gasturbine zugeführt wird. Anderseits erzeugen die Druckwellen in einem weiteren Bereich des Rotorraumes, ein Mitteldrucktreibgas und ein Niederdrucktreibgas, die über den Mitteldruckgaskanal und den Hochdruckluftkanal den entsprechenden Druckniveaus der Turbine zugeführt werden.

Die Druckwellenmaschine erlaubt, ähnlich wie ein Kolbenmotor, sehr viel höhere Gastemperaturen, zudem ermöglicht die Druckwellenmaschine eine Verbrennung bei konstantem Volumen.Ferner werden in der Druckwellenmaschine transiente Vorgänge (Detonationstransienten) optimal genutzt.

Während die klassischen Druckwellenmaschinen, die als Auflader bei Brennkraftmaschinen zum Einsatz kommen, nur den Vorteil der höheren Gastemperatur nutzen, nutzt die in EP-B1-0 212 181 vorgeschlagene Druckwellenmaschine sämtliche vorab aufgeführten Effekte. Mit vielen Brennstoffen, beispielsweise mit Erdgas, werden die in der genannten Patentschrift angestrebten Bedingungen hinsichtlich Druck und Temperatur zur Zündung einer Detonation erst in Extrembereichen erreicht, die für den herkömmlichen Maschinenbau in der Regel nicht ausgenutzt werden.

Eine Druckwellenmaschine mit deutlich erhöhtem Wirkungsgrad wird in der Schrift EP-A1 0 468 083 gezeigt. Bei dieser Druckwellenmaschine wird eine Verbrennung bei konstantem Volumen ausgenutzt.Zudem werden bei dieser Druckwellenmaschine die Detonationstransienten konsequent genutzt, was eine zusätzliche Wirkungsgraderhöhung mit sich bringt.

### Darstellung der Erfindung

Die Erfindung, wie sie in den unabhängigen Ansprüchen gekennzeichnet ist, löst die Aufgabe, eine Druckwellenmaschine zu schaffen, die zur optimalen Führung chemischer Reaktionen geeignet ist.

Die durch die Erfindung erreichten Vorteile sind im Wesentlichen darin zu sehen, dass aufwendige chemische Apparaturen,die einen grossen Platzbedarf haben, durch eine vergleichsweise kleine, als chemischer Reaktor dienende Druckwellenmaschine ersetzt werden können.

Eine bevorzugte Ausführungsform der Erfindung weist eine Druckwellenmaschine auf mit einem mindestens eine Lage Zellen aufweisenden Zellenrotor, mit einem den Zellenrotor am Umfang und stirnseitig einschliessenden Gehäuse, mit Mitteln, welche ein Gas vor dem Eintritt in die Druckwellenmaschine mit einem Brennstoff vermischen zu einem brennbaren Brennstoff-Gas-Gemisch, welches in die Zellen eingeleitet und dort gezündet wird.In dieser Druckwellenmaschine sind Mittel vorgesehen, welche die Einleitung von mindestens einem Edukt zusätzlich zu dem Brennstoff-Gas-Gemisch ermöglichen.Die nach der Zündung des Brennstoff-Gas-Gemisches in den jeweiligen Zellen auftretenden Temperaturen und Drücke sind auf das jeweilige mindestens eine Edukt abgestimmt, sodass dieses solange chemisch umgesetzt wird, bis eine Expansionswelle diese Umsetzung zum Erliegen bringt. Zudem sind der Druckwellenmaschine Mittel nachgeschaltet für eine Austragung des mindestens einen Produktes dieser Umsetzung.

Die weiteren vorteilhaften und zweckmässigen Ausgestaltungen der Erfindung sind Gegenstände der abhängigen Ansprüche.

Die Erfindung, ihre Weiterbildung und die damit verbundenen Vorteile werden nachstehend anhand der Zeichnung, welche lediglich einen möglichen Ausführungsweg darstellt, näher erläutert. Dabei sind alle für das unmittelbare Verständnis der Erfindung nicht erforderlichen Elemente fortgelassen.

### Kurze Beschreibung der Zeichnung

Es zeigen:
- Fig.1: eine schematische Darstellung einer ersten Ausführungsform der Erfindung;
- Fig.2: eine schematische Darstellung einer zweiten Ausführungsform der Erfindung;
- Fig.3: eine schematische Darstellung einer dritten Ausführungsform der Erfindung;
- Fig.4: eine schematische Darstellung einer vierten Ausführungsform der Erfindung;
- Fig.5: eine schematische Darstellung einer fünften Ausführungsform der Erfindung;
- Fig.6: eine schematische Darstellung einer sechsten Ausführungsform der Erfindung, und
- Fig.7: einen schematischen Verlauf eines Druckwellenprozesses in der erfindungsgemässen Druckwellenmaschine.

Bei allen Figuren sind gleich wirkende Elemente mit gleichen Bezugszeichen versehen.

### Wege zur Ausführung der Erfindung

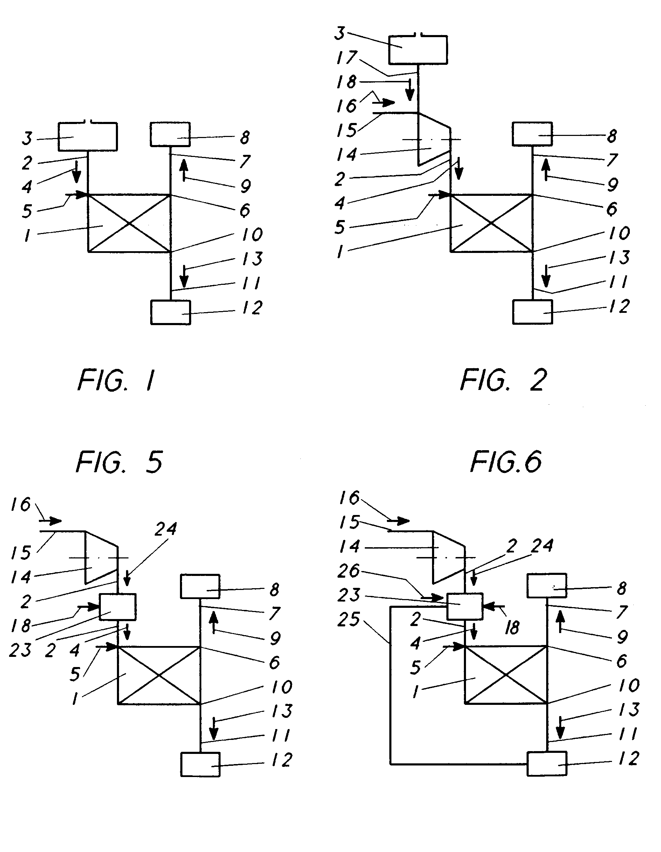

In Fig. 1 ist eine Druckwellenmaschine 1 schematisch dargestellt. Diese Druckwellenmaschine 1 weist einen Zellenrotor und ein Gehäuse auf, welche hier jedoch nicht separat dargestellt sind. In der Schrift EP-A1 0 468 083 ist eine ähnliche Druckwellenmaschine beschrieben, sodass hier eine umfassende Beschreibung des Aufbaus derselben unterbleiben kann. Durch eine Niederdruckleitung 2 wird mindestens ein Edukt aus einem Beschickungsbehälter 3 der Druckwellenmaschine 1 zugeführt. Gleichzeitig mit dem Edukt wird ein Gas, welches brennbar oder anderweitig chemisch reaktionsfähig sein kann, durch die Niederdruckleitung 2 der Druckwellenmaschine 1 zugeführt; die Strömungsrichtung wird durch einen Pfeil 4 angedeutet. Unmittelbar vor dem Eintritt in die Druckwellenmaschine 1 wird dieses strömende Medium in einem nicht dargestellten Vormischkanal mit Brennstoff vermischt zu einem brennbaren Brennstoff-Gas-Gemisch. Die Zugabe des Brennstoffes wird durch einen Pfeil 5 angedeutet. Die Druckwellenmaschine 1 weist im Normalfall zwei Ausgänge auf, nämlich einen Hochdruckausgang 6 von dem eine Leitung 7 ausgetragene Produkte in einen Behälter 8 abführt, wie der Pfeil 9 andeutet, und einen Mitteldruckausgang 10 von dem eine Leitung 11 ausgetragene Produkte in einen Behälter 12 abführt, wie der Pfeil 13 andeutet. Es ist möglich, nur einen der Ausgänge bei der gezielten Herstellung von Produkten zu benutzen, während die aus dem anderen Ausgang austretenden heissen Gase beispielsweise für die Energieerzeugung in einer Gasturbine eingesetzt werden können.

Der in Fig.2 dargestellten Druckwellenmaschine 1 ist ein Niederdruckverdichter 14 vorgeschaltet, in den durch eine Leitung 15, wie durch einen Pfeil 16 angedeutet, das zu verdichtende Gas einströmt. Aus dem Beschickungsbehälter 3 wird durch eine Leitung 17, wie ein Pfeil 18 andeutet, das Edukt entnommen und dem Gas beigemischt und mit diesem gemeinsam in den Niederdruckverdichter 14 geleitet und dort verdichtet. Die so entstandene Mischung wird durch die Niederdruckleitung 2 der Druckwellenmaschine 1 zugeführt; die Strömungsrichtung wird durch den Pfeil 4 angegeben. Unmittelbar vor dem Eintritt in die Druckwellenmaschine 1 wird dieses strömende Medium in einem nicht dargestellten Vormischkanal mit Brennstoff zu einem brennbaren Brennstoff-Gas-Gemisch vermischt. Die Zugabe des Brennstoffes wird durch einen Pfeil 5 angedeutet. Die Ausgänge der Druckwellenmaschine 1 sind gleich angeordnet wie bei Fig.1. Bei dieser Ausführung der Druckwellenmaschine 1 ist es auch möglich, die Leitung 17 erst nach dem Niederdruckverdichter 14 in die Niederdruckleitung 2 einmünden zu lassen, wenn dies bei dem zu verarbeitenden Edukt sinnvoll zu sein scheint.

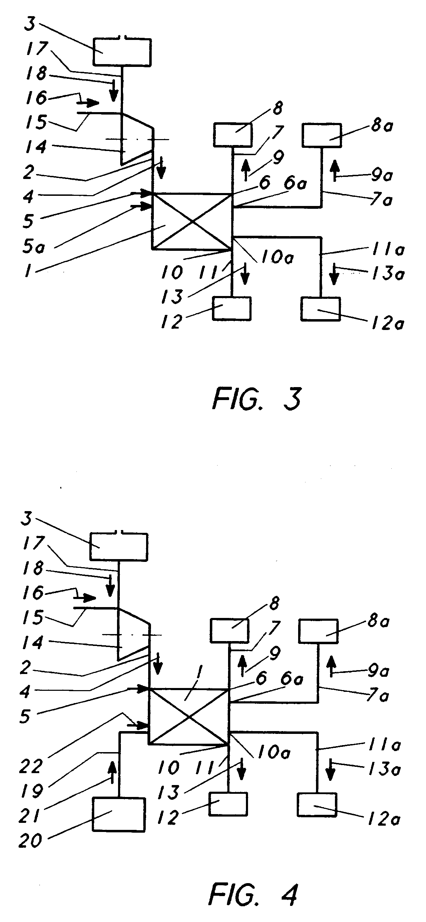

Fig.3 zeigt eine Druckwellenmaschine 1, die mindestens zwei Lagen Zellen im Zellenrotor aufweist, die sonst jedoch der Druckwellenmaschine 1 gemäss Fig.2 entspricht. Die zweite Lage der Zellen wird durch den Pfeil 5a, der die Brennstoffbeimischung für die aus der Niederdruckleitung 2 in die Druckwellenmaschine 1 einströmende Mischung symbolisiert, angedeutet.Dem Hochdruckausgang 6 der ersten Lage entspricht der Hochdruckausgang 6a der zweiten Lage, dem Mitteldruckausgang 10 der ersten Lage entspricht der Mitteldruckausgang 10a der zweiten Lage. Es ist durchaus möglich, die beiden Lagen von Zellen auch gemeinsam von einem einzigen Vormischkanal aus anzuspeisen. Ebenso ist es möglich, die Produkte auf dem jeweiligen Druckniveau in jeweils einen einzigen Behälter 8 bzw. Behälter 12 einzuleiten. Es kann jedoch auch günstig sein, die Produkte jeder der Lagen auf dem jeweiligen Druckniveau in separaten Behältern 8,12,8a,12a zu sammeln, wie dies in Fig.3 dargestellt ist. Die Pfeile 9a,13a geben die Strömungsrichtung der Produkte in den zu den entsprechenden Behältern 8a und 12a führenden Leitungen 7a und 11a an.

In der Fig.4 ist eine Druckwellenmaschine 1 dargestellt, die ebenfalls mindestens zwei Lagen Zellen aufweist. Jedoch wird bei dieser Druckwellenmaschine 1 die zweite Lage durch eine Niederdruckleitung 19 von einem zweiten Beschickungsbehälter 20 her mit einem zweiten, mit einem Gas vermischten Edukt beschickt. Dieses zweite Edukt kann in der Regel eine vom Edukt in dem Beschickungsbehälter 3 völlig verschiedene chemische Zusammensetzung haben. Ein Pfeil 21 deutet die Strömungsrichtung des entstandenen Mediums an. Die Zugabe des Brennstoffes wird durch einen Pfeil 22 angedeutet. Unmittelbar vor dem Eintritt in die Druckwellenmaschine 1 wird dieses strömende Medium in einem nicht dargestellten Vormischkanal mit Brennstoff vermischt zu einem brennbaren Brennstoff-Gas-Gemisch. Mit dieser Druckwellenmaschine 1 lassen sich, völlig unabhängig voneinander, zwei oder mehr verschiedene Produkte herstellen.

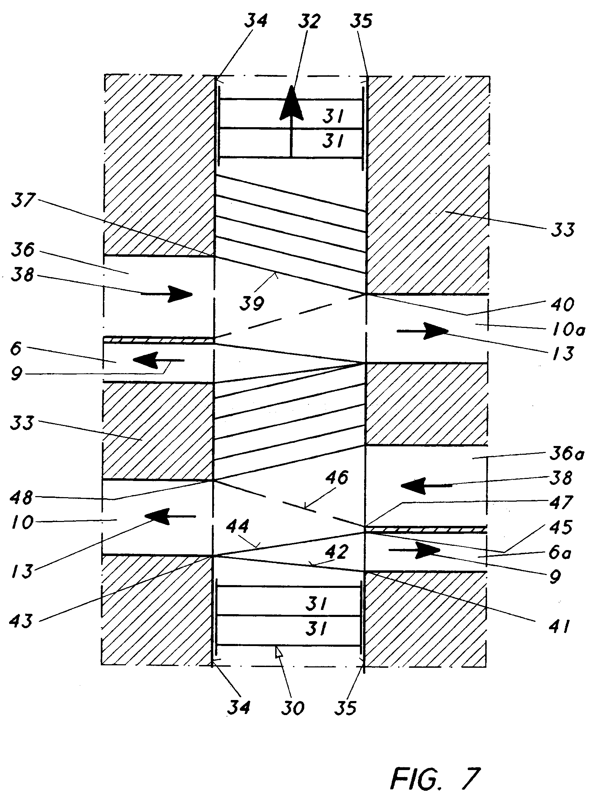

Die Fig.5 zeigt eine Druckwellenmaschine 1 ähnlich der in Fig.2 gezeigten, bei der zwischen dem Niederdruckverdichter 14 und der Druckwellenmaschine 1 im Zuge der Niederdruckleitung 2 ein Mischer 23 vorgesehen ist. Ein Pfeil 24 gibt die Strömungsrichtung des vorverdichteten, in den Mischer 23 strömenden Gases an. Der Pfeil 18 deutet das in den Mischer 23 eingegebene Edukt an, welches von einem nicht dargestellten Beschickungsbehälter aus zuströmt.Im Mischer 23 wird aus dem vorverdichteten Gas und aus dem Edukt eine Mischung hergestellt, die der Druckwellenmaschine 1 zugeführt wird. Unmittelbar vor dem Eintritt in die Druckwellenmaschine 1 wird dieses strömende Medium in einem nicht dargestellten Vormischkanal mit Brennstoff zu einem brennbaren Brennstoff-Gas-Gemisch vermischt. Die Zugabe des Brennstoffes wird durch einen Pfeil 5 angedeutet. Die Ausgänge der Druckwellenmaschine 1 sind gleich angeordnet wie bei Fig.1.

Die Fig.6 zeigt eine Druckwellenmaschine 1 ähnlich der von Fig.5. Ein Pfeil 24 gibt die Strömungsrichtung des vorverdichteten, in den Mischer 23 strömenden Gases an. Der Pfeil 18 deutet das in den Mischer 23 eingegebene Edukt an, welches von einem nicht dargestellten Beschickungsbehälter aus zuströmt. Das aus dem Mitteldruckausgang 10 ausströmende Produkt wird als Vorstufe zum im Behälter 8 gesammelten, als Endprodukt zu betrachtenden Produkt, im Behälter 12 aufgefangen und aus diesem durch eine Leitung 25 abgeführt. Die Leitung 25 verbindet den Behälter 12 mit dem Mischer 23. Pfeile 26 geben die Strömungsrichtung des als Vorstufe zu betrachtenden Produktes an. Im Mischer 23 wird aus dem vorverdichteten Gas, dem als Vorstufe zu betrachtenden Produkt und aus dem Edukt eine Mischung hergestellt, die der Druckwellenmaschine 1 zugeführt wird. Unmittelbar vor dem Eintritt in die Druckwellenmaschine 1 wird dieses strömende Medium in einem nicht dargestellten Vormischkanal mit Brennstoff zu einem brennbaren Brennstoff-Gas-Gemisch vermischt. Die Zugabe des Brennstoffes wird durch einen Pfeil 5 angedeutet. In der Druckwellenmaschine 1 kann dann die weitere Umsetzung des als Vorstufe zu betrachtenden Produktes zum eigentlichen Endprodukt erfolgen. Die Ausgänge der Druckwellenmaschine 1 sind gleich angeordnet wie bei Fig.1.

Die Fig.7 zeigt schematisch eine Abwicklung eines Zellenrotors 30 der Druckwellenmaschine 1, soweit sie zur Erklärung des Druckwellenprozesses gebraucht wird. Vom Zellenrotor 30 sind nur einzelne Zellen 31 dargestellt, die hier in der Fig.7 rechtwinklig zur durch einen Pfeil 32 angegebenen Drehrichtung des Zellenrotors 30 verlaufen. Selbstverständlich können diese Zellen 31 auch schräg zur Drehrichtung angeordnet sein, wie dies beispielsweise in der Schrift EP-B1-0 212 181 beschrieben wird, wobei in diesem Zusammenhang, auf die dortige Beschreibung verwiesen wird. Der Zellenrotor 30 selbst läuft mit sehr kleinem Spiel in einem nur andeutungsweise gezeigten Gehäuse 33 wobei die beiden, dem Zellenrotor 30 zugewandten Stirnseiten 34, 35 des Gehäuses 33 mit verschiedenen Kanälen durchsetzt sind. Die Stirnseite 34 wird vom Vormischkanal 36, vom Hochdruckausgang 6 und vom Mitteldruckausgang 10 durchsetzt. Die Stirnseite 35 wird vom Vormischkanal 36a, vom Hochdruckausgang 6a und vom Mitteldruckausgang 10a durchsetzt. Die beiden Vormischkanäle 36 und 36a, die beiden Hochdruckausgänge 6 und 6a und die beiden Mitteldruckausgänge 10 und 10a sind jeweils innerhalb des Gehäuses 33 miteinander verbunden, insbesondere werden die beiden Hochdruckausgänge 6 und 6a gemeinsam in die Leitung 7 geführt, und die beiden Mitteldruckausgänge 10 und 10a gemeinsam in die Leitung 11.Der Zellenrotor 30 wird demnach von beiden Seiten her beschickt und nach beiden Seiten werden die Produkte ausgetragen. Durch diese symmetrische Anordnung ist sichergestellt, dass eine gleichförmige Temperaturverteilung im Zellenrotor 30 erzielt wird. Im Folgenden wird deshalb lediglich der eine Zyklusteil des im Zellenrotor 30 ablaufenden Prozesses beschrieben.

Das aus dem Vormischkanal 36 kommende Brennstoff-Gas-Gemisch strömt in die Zellen 31 des Zellenrotors 30 ein. Dieses Brennstoff-Gas-Gemisch weist ein im Vergleich zu den übrigen Druckniveaus in dieser Anlage niederes Druckniveau auf. In die am Vormischkanal 36 vorbeidrehenden Zellen 31 wird jeweils eine bestimmte Menge des Brennstoff-Gas-Gemisches eingefüllt. Die Füllung der Zellen 31 wird durch eine an das Gehäuse 33 angeformte Schliesskante 37 des Vormischkanals 36 abgeschlossen. Das Einströmen des Brennstoff-Gas-Gemisches wird durch einen Pfeil 38 symbolisiert. Die Linie 39 gibt den Verlauf der Stosswelle zwischen der Schliesskante 37 des Vormischkanals 36 und einer Schliesskante 40, die im Bereich des Mitteldruckausgangs 10a an das Gehäuse 33 angeformt ist, an. Um eine anschaulichere Skizze zu erhalten, werden die Wände der Zellen 31 in diesem Bereich des Zellenrotors 30 nicht dargestellt. Die Zellen 31 weisen ein konstantes Volumen auf. Die Zündung des in den Zellen 31 eingeschlossenen Brennstoff-Gas-Gemisches erfolgt entweder durch Zündbügel oder gleich oder ähnlich wirkende Zündhilfen, wie in der Schrift EP-0 468 083 beschrieben, oder sie erfolgt spontan von selbst. Dabei ist es möglich, eine oder mehrere Zündstufen pro Zelle 31 vorzusehen, abhägig von den jeweiligen Betriebsverhältnissen der Druckwellenmaschine 1. Das Produkt, welches in jeder der geschlossenen Zellen 31 durch die bei konstantem Volumen erfolgende Verbrennung in Verbindung mit der damit gleichzeitig stattfindenden Druckerhöhung entsteht, wird im darauf folgenden Zyklusteil durch den Hochdruckausgang 6a in die Leitung 7 und weiter in den Behälter 8 geleitet, sobald die betreffende Zelle 31 eine Öffnungskante 41 überstrichen hat. Dieses Ausströmen aus der Zelle 31 verursacht in der jeweiligen Zelle 31 eine Expansionswelle 42, welche den im Innern der Zelle 31 ablaufenden Umsetzungsprozess schlagartig unterbricht. Von einer weiteren Öffnungskante 43 geht eine weitere Expansionswelle 44 aus, sobald die betreffende Zelle 31 diese Öffnungskante 43 überstrichen hat. Diese Öffnungskante 43 gibt die Ausströmung in den Mitteldruckausgang 10 frei. Von der Öffnungskante 43 des Mitteldruckausgangs 10 läuft die Expansionswelle 44 zu einer Schliesskante 45 des Hochdruckausgangs 6.

Eine gestrichelt dargestellte Mediengrenze 46, die von der Öffnungskante 47 des Vormischkanals 36a zu einer Schliesskante 48 des Mitteldruckausgangs 10 verläuft, erstreckt sich dabei über die ganze Breite des Zellenrotors 30, wobei diese Mediengrenze 46 nicht von Expansionswellen gekreuzt wird. Das bedeutet, dass die Produkte vollständig aus den Zellen 31 gedrängt und ausgetragen werden. Anschliessend fängt ein neuer Zyklus an, bei welchem die nun leeren Zellen 31 vom Vormischkanal 36a her mit dem Brennstoff-Gas-Gemisch gefüllt werden. Jede der Zellen 31 stellt demnach für sich eine durch ein konstantes Volumen charakterisierte Brennkammer dar, die entsprechend den herzustellenden Produkten ausgelegt ist. Zur Verbesserung oder Beschleunigung der in den Zellen 31 stattfindenden chemischen Umsetzung, werden die Zellenwände häufig zumindest teilweise mit einem bei der Umsetzung als Katalysator wirkenden Belag beschichtet. So wird bei der Herstellung von Methylalkohol beispielsweise als Katalysator ZnO oder FeO eingesetzt, wodurch die Ausbeute wesentlich erhöht wird.

Bei der Herstellung von Methylalkohol wird als Gas Kohlenoxyd CO und als Edukt Wasserstoff H₂ in die Druckwellenmaschine 1 eingeleitet. Wird ZnO als Katalysator vorgesehen, so wird in der Druckwellenmaschine 1 ein Druck von 200 Atmosphären und eine Temperatur von 450 °C für die chemische Umsetzung erzeugt. Als Produkt wird dann Methylalkohol CH₃OH ausgetragen.

Es sind eine Vielzahl weiterer Polymerisationen vorstellbar, die mittels einer Druckwellenmaschine wirtschaftlich und ohne grossen Aufwand für herkömmliche Hochdruckkolonnen durchgeführt werden können. Ferner ist es möglich auch Crackverfahrensschritte mit Druckwellenmaschinen einfach auszuführen.

### Bezeichnungsliste

- 1: Druckwellenmaschine
- 2: Niederdruckleitung
- 3: Beschickungsbehälter
- 4,5,5a: Pfeil
- 6,6a: Hochdruckausgang
- 7,7a: Leitung
- 8,8a: Behälter
- 9,9a: Pfeil
- 10,10a: Mitteldruckausgang
- 11,11a: Leitung
- 12,12a: Behälter
- 13,13a: Pfeil
- 14: Niederdruckverdichter
- 15: Leitung
- 16: Pfeil
- 17: Leitung
- 18: Pfeil
- 19: Niederdruckleitung
- 20: Beschickungsbehälter
- 21,22: Pfeil
- 23: Mischer
- 24: Pfeil
- 25: Leitung
- 26: Pfeil
- 30: Zellenrotor
- 31: Zellen
- 32: Pfeil
- 33: Gehäuse
- 34,35: Stirnseite
- 36,36a: Vormischkanal
- 37: Schliesskante
- 38: Pfeil
- 39: Linie
- 40: Schliesskante
- 41: Öffnungskante
- 42: Expansionswelle
- 43: Öffnungskante
- 44: Expansionswelle
- 45: Schliesskante
- 46: Mediengrenze
- 47: Öffnungskante
- 48: Schliesskante

## Patentansprüche

1. Druckwellenmaschine (1) mit einem mindestens eine Lage Zellen (31) aufweisenden Zellenrotor (30), mit einem den Zellenrotor (30) am Umfang und stirnseitig einschliessenden Gehäuse (33), mit Mitteln, welche ein Gas vor dem Eintritt in die Druckwellenmaschine (1) mit einem Brennstoff vermischen zu einem brennbaren Brennstoff-Gas-Gemisch, welches in die Zellen (31) eingeleitet und dort gezündet wird,
dadurch gekennzeichnet,
- dass Mittel vorgesehen sind, welche die Einleitung von mindestens einem Edukt zusätzlich zu dem Brennstoff-Gas-Gemisch ermöglichen,
- dass die nach der Zündung des Brennstoff-Gas-Gemisches in den jeweiligen Zellen (31) auftretenden Temperaturen und Drücke auf das jeweilige mindestens eine Edukt abgestimmt sind, sodass dieses solange chemisch umgesetzt wird, bis eine Expansionswelle (42) diese Umsetzung zum Erliegen bringt, und
- dass der Druckwellenmaschine (1) Mittel nachgeschaltet sind für eine Austragung des mindestens einen Produktes dieser Umsetzung.

2. Druckwellenmaschine nach Anspruch 1, dadurch gekennzeichnet,
- dass in die Druckwellenmaschine (1) ein fluidisiertes Gemenge aus dem Brennstoff-Gas-Gemisch und dem mindestens einen Edukt eingebracht wird.

3. Druckwellenmaschine nach Anspruch 1, dadurch gekennzeichnet,
- dass der Druckwellenmaschine (1) ein Niederdruckverdichter (14) vorgeschaltet ist,
- dass das mindestens eine Edukt zusammen mit dem Gas in dem Niederdruckverdichter (14) vorverdichtet und zu einer ersten Mischung verarbeitet wird, und
- dass diese erste Mischung zusammen mit dem im Bereich des Eintritts hinzugefügten Brennstoff in die Druckwellenmaschine (1) eingebracht wird.

4. Druckwellenmaschine nach Anspruch 3, dadurch gekennzeichnet,
- dass der Zellenrotor mindestens zwei Lagen von Zellen (31) aufweist,
- dass jede dieser mindestens zwei Lagen von Zellen (31) mit jeweils einer Mischung deren Zusammensetzung sich von derjenigen der anderen Mischung unterscheidet, beschickbar ausgebildet ist,
- dass mindestens die erste Lage von Zellen (31) für die Herstellung mindestens eines ersten Produktes ausgelegt ist, und
- dass mindestens die zweite Lage von Zellen (31) für die Herstellung mindestens eines zweiten Produktes ausgelegt ist.

5. Druckwellenmaschine nach Anspruch 1, dadurch gekennzeichnet,
- dass der Druckwellenmaschine (1) ein Niederdruckverdichter (14) vorgeschaltet ist, in welchem das Gas vorverdichtet wird,
- dass zwischen dem Niederdruckverdichter (14) und der Druckwellenmaschine (1) ein Mischer (23) vorgesehen ist für die Vermischung des mindestens einen Eduktes mit dem verdichteten Gas zu einer Mischung,und
- dass diese Mischung zusammen mit dem im Bereich des Eintritts hinzugefügten Brennstoff in die Druckwellenmaschine (1) eingebracht wird.

6. Druckwellenmaschine nach Anspruch 1, dadurch gekennzeichnet,
- dass ein erstes Produkt der Umsetzung bei einem Hochdruckausgang (6,6a) der Druckwellenmaschine (1) ausgetragen wird, und
- dass ein zweites Produkt der Umsetzung bei einem Mitteldruckausgang (10,10a) der Druckwellenmaschine (1) ausgetragen wird.

7. Druckwellenmaschine nach den Ansprüchen 5 und 6, dadurch gekennzeichnet,
- dass das zweite Produkt der Umsetzung als Zwischenprodukt bei der Herstellung des ersten Produktes anfällt,
- dass dieses zweite Produkt nach der Austragung in dem Mischer (23) mit dem mindestens einen ersten Edukt und dem verdichteten Gas zu einer Mischung vermischt wird, und
- dass diese Mischung zusammen mit dem im Bereich des Eintritts hinzugefügten Brennstoff in die Druckwellenmaschine (1) eingebracht wird.

8. Druckwellenmaschine nach einem der Ansprüche 1 bis 7, dadurch gekennzeichnet,
- dass die Zellen (31) des Zellenrotors (30) Wände aufweisen, die zumindest teilweise mit einem bei der Umsetzung als Katalysator wirkenden Belag beschichtet sind.
